# EUROPEAN PATENT APPLICATION

(11) **EP 0 844 794 A2**
(43) Date of publication of application: **27.05.1998**
(21) Application number: 97309395.8
(22) Date of filing: 21.11.1997
(51) Int. Cl.: H04N 9/804

(54) **Digital video signal recording apparatus and digital video signal reproducing apparatus**

(30) Priority: 22.11.1996 JP 327958/96
(71) Applicant: Victor Company of Japan, Ltd., Yokohama 221 (JP)
(72) Inventor: Matsuo, Yasutoshi, Atsugi-shi, Kanagawa-ken (JP)
(74) Representative: Senior, Alan Murray

(57) **Abstract**

A digital video signal recording and reproducing apparatus is disclosed which includes: a recording portion (21-27) for recording a digital video signal having a first resolution on a recording medium; a division-converting circuit (65, 67) for converting a still picture video signal having a second resolution higher than the first resolution into a division-converted signal through dividing the still picture video signal by n which is a natural number more than one; and an auxiliary data generation circuit (43, 36) for generating first auxiliary data indicative of the n and second auxiliary data indicative of a frame size of the still picture video signal. The HDS video signal of a still picture image is divided and dummy data is inserted to convert it into the SD video signal. The data regarding this conversion is recorded and reproduced on/from the recording medium as auxiliary data. The HDS video signal also is recorded as the SD signal through thinning and a thumbnail video signal is generated through thinning and recorded which is also used for searching using time code. This apparatus also reproduces the HDS video signal of the still picture image, thinning-converted video signal, and the thumbnail video signal, in addition to the SD video signal.

## Description

This invention relates to a digital video signal recording apparatus and a digital video signal reproducing apparatus.

A digital video signal recording apparatus and a digital video signal reproducing apparatus are known.

A standard referred to as "DVC" (hereinafter referred to as "DVC standard") has been proposed as a standard for a digital VTR (a video tape recorder) for recording video data through data compression (for example, National Technical Report Vol. 41 No. 2 Apr. 1995 from p48 to p55). In this DVC standard, there are a standard for recording the video signal (SD signal) having a general resolution of the level of the current broadcasting and a standard for recording a video signal (HD signal) having a higher resolution. An outline of the standard for recording the SD signal will be described below.

In the 525/60 method (the NTSC method corresponding to this), the video signal is sampled at (4:1:1).
Regarding the luminance (Y) signal, the number of effective pixels in the horizontal direction is 720 and the number of effective lines in the vertical direction in a frame is 480 and regarding the color difference (Cb and Cr) signals, the number of effective pixels in the horizontal direction is 180 and the number of effective lines in the vertical direction is 480 which the same as the luminance signal.

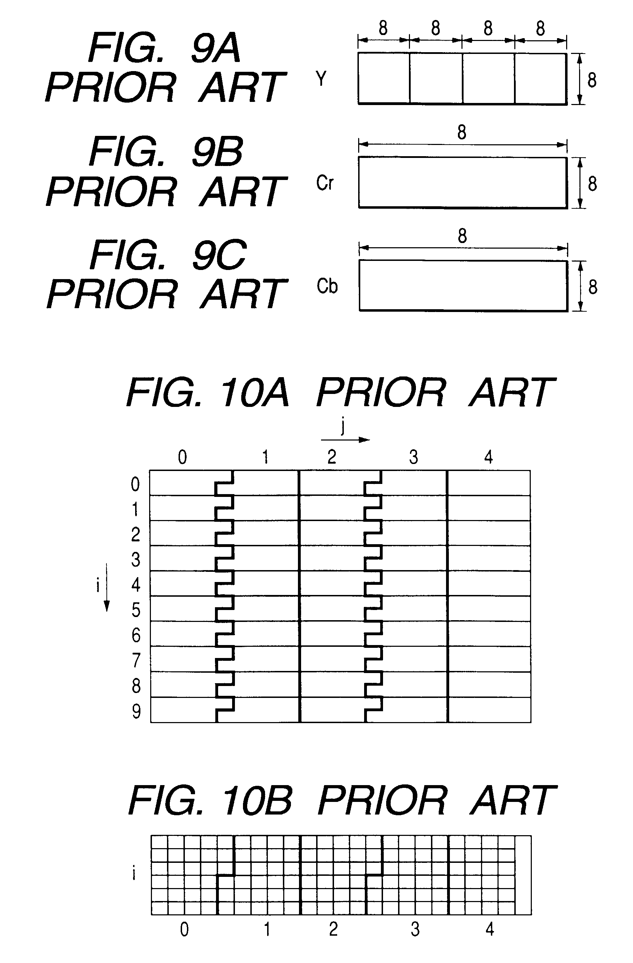

Figs. 9A to 9C are illustration of the prior art showing blocks for the DCT operation. The effective pixel data is sectioned to provide blocks and the DCT (discrete cosine conversion) operation is effected. Blocks for the DCT operation (hereinafter referred to as "DCT BLOCK") are formed by respectively sectioning one frame of the luminance (Y) signal and the color difference (Cb and Cr) signals with horizontal eight pixels x vertical eight pixels. Then, as shown in Figs. 9A to 9C, six DCT blocks including four DCT blocks of the Y signal corresponding to the same area at the same position on the screen and one DCT block of the Cb signal and one DCT block of the Cr signal are refereed as "macro-blocks".

Fig. 10A and 10B are illustrations of the prior art showing a screen format and a partial enlarged view of the screen format. Moreover, a screen of one frame is divided with a unit of 27 macro-blocks, so that super blocks are formed as shown in Fig. 10A. Then, one block is selected from respective row in Fig. 10A and one macro-block is selected from each super block and one video segment is formed by five macro-blocks. On compression, a data amount is controlled every video segment unit within a predetermined amount.

For the DCT operation, there are two mode, namely, the mode for effecting 8 x 8 DCT, i.e., effecting DCT with horizontal eight pixels by vertical eight pixels every frame unit and the mode for effecting 8 x 4 DCT, i.e., effecting DCT with horizontal eight pixels by vertical four pixels every frame unit and operating a sum and difference between respective DCT coefficients of two fields and it is possible to adaptively switch them on coding. The DCT coefficients obtained by the DCT operation are quantized with one of quantizing tables selected to make an amount of data after quantizing and variable length coding equal to or less than a predetermined value and a value nearest the predetermined value.

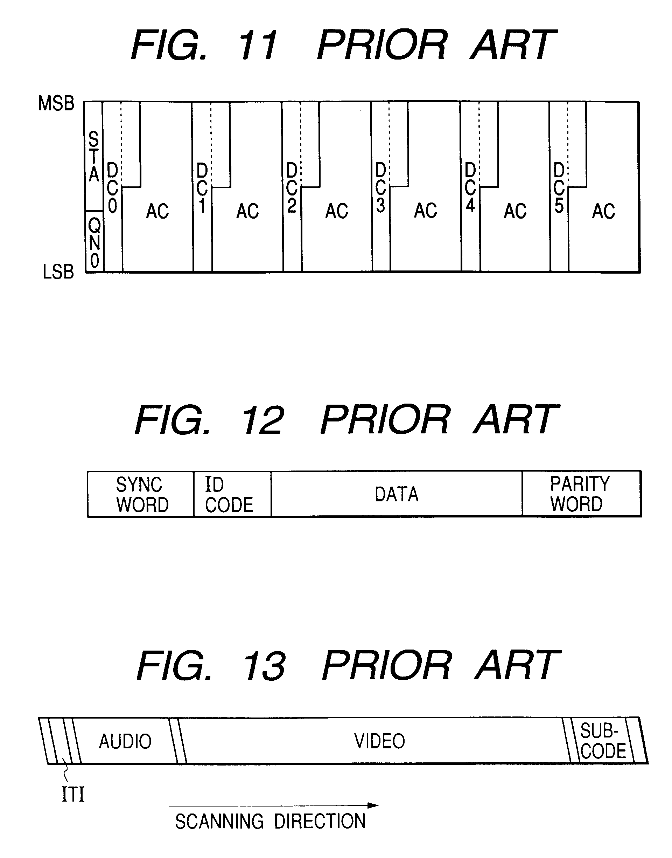

Fig. 11 is an illustration of the prior art showing a data format and Fig. 12 is an illustration of the prior art showing a format of a synchronous block. The data after quantizing and the variable length coding is formatted every micro-block unit as shown in Fig. 11 and is recorded on a magnetic tape in the form of the synchronous block in which a SYNC word, an ID Code and a parity word for error correction are added as shown in Fig. 12. One frame of the video data is divided into ten tracks and recorded. One row of super blocks of the video data shown in Fig 10A is recorded one track. Fig. 13 is an illustration of the prior art showing a track format.

The data formatted as show in Fig. 11 includes various parameters necessary for decoding (information STA for error and concealing, the number QNO of the selected quantizing table or the like). The data of one video segment is stored in five synchronous blocks. The data of dc component is stored in the DC regions in the drawing (DCO to DC5) and ac components are stored in AC regions. The ac components are stored at the AC region of the corresponding DCT block in the same synchronous block as the dc components basically. However, if the amount of data is higher than a capacity of the place assigned, free AC regions in the same synchronous block are used and free AC regions in the same video segment are used.

In the ID code shown in Fig. 12, a track pair number indicative of what is the number of tracks from the begging of first track out of ten tracks and the synchronous block number indicative of what is the number of synchronous block in one track are stored. Moreover, in the ID code of the synchronous block storing video data, in addition, a sequence number (SEQ. No.) is stored. This is the number provided by assigning numbers from zero to eleven to successive twelve frames.

In Fig. 13, ITI denotes the ITI (Insert and Track Information) sector in which the data for making the tracking controlling during insert-editing easy is mainly recorded. AUDIO denotes an audio sector formed by nine synchronous blocks for storing audio data and five synchronous blocks for storing outer parities. VIDEO denotes a video sector in which 135 synchronous blocks for storing video data, three synchronous blocks for storing auxiliary data referred to as video AUX, and eleven synchronous blocks for storing outer parities. SUBCODE denotes a sub-code sector for recording time code information or the like. Further, in Fig. 13, there are portions referred to as gapes which are margins for preventing other sectors from being destroyed during the insert-editing every sector unit.

A method of recording a still picture according to the SD standard with the VTR designed according to the DVC standard as mentioned above has been proposed such as a snap recording mode, a stroboscopic recording mode, a single shot recording mode, and a successive shot recording mode.

The snap recording mode is that a still picture is recorded on a tape for several seconds, the stroboscopic recording mode is that still pictures are recorded through switching every unit of from several to tens frames, the single shot recording mode is that one still picture is recorded over for example five frames, and the successive shot recording mode is that the single shot recording is repeated.

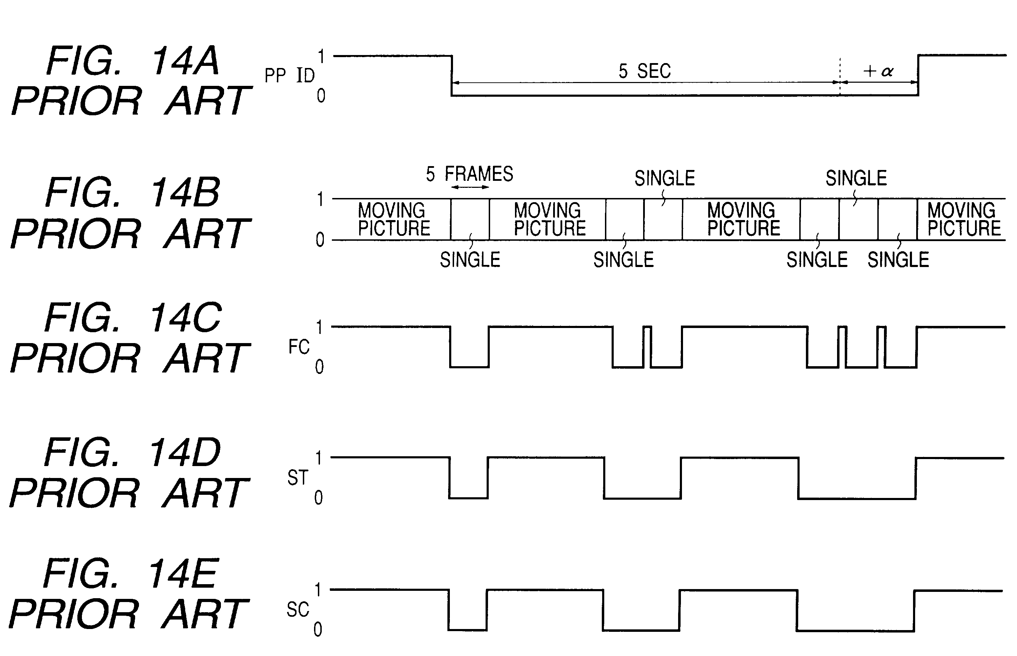

Figs. 14A to 14E are time charts of the prior art showing respective recording modes. As the flags for providing a distinct between respective recording modes of the still picture and recording modes for moving pictures, a PPID flag, a FC flag, a ST flag and a SC flag are defined. These flags are set as shown in Figs. 14A to 14E for example. That is, the PPID flag is set to "0" for five seconds from the beginning of recording the still picture as a general rule. Moreover, if "0" is set to the SC flag, "0" is set to the PPID flag while the SC flag is "0". The FC flag is set with "0" when the picture of the present frame is the same as that of the Just previous frame. The ST flag is set with "0" when a time difference between pictures of two fields within one frame is approximately zero. The SC flag is set with "0" when the recorded picture is a still picture. In Fig. 14B, "single" represents the single shot recording mode.

The aim of the present invention is to provide an improved digital video signal recording apparatus and an improved digital video signal reproducing apparatus.

According to the present invention, a digital video signal recording apparatus is provided, which comprises: a recording portion (21-27) for recording a digital video signal having a first resolution on a recording medium; a division-converting circuit (65, 67) for converting a still picture video signal having a second resolution higher than the first resolution into a division-converted signal through dividing the still picture video signal by n which is a natural number more than one; and an auxiliary data generation circuit (43, 36) for generating first auxiliary data indicative of the n and second auxiliary data indicative of a frame size of the still picture video signal. The recording portion records the division-converted signal and the first and second auxiliary data on the recording medium.

In the digital video signal recording apparatus, the auxiliary data generating circuit generates auxiliary data indicative of a ratio of the number of pixels of a luminance signal of the still picture video signal and the number of pixels of a color difference signal of the still picture video signal, the recording portion further recording the third auxiliary data on the recording portion.

In the digital video signal recording apparatus, the recording portion comprises a video data compression circuit for compressing the division-converted signal through quadrature conversion every block including a predetermined number of pixels and the division-converting circuit comprises: a dummy data generation circuit (68a) for generating and adding dummy data to the divided still picture video signals with a unit of the block to generate the division-converted signal; and a changing circuit (43, 65, 67, 68a) responsive to a command for changing a ratio of the number of the generated dummy data in one frame of the division-converted signal and the number of data of the still picture video signal of one frame and changing the n, the auxiliary data generation circuit generates fourth auxiliary data indicative of the ratio and the recording portion records the changed n and the fourth auxiliary data on the magnetic medium.

In the digital video signal recording apparatus, the division-conversion circuit outputs one frame of the division-converted signal a predetermined times more than once and the auxiliary data generation circuit, generates third auxiliary data indicative of the predetermined times, comprises a counting circuit for counting times of outputting the same frame of the division-converted signal, and generates fourth auxiliary data indicative of the count value, and the recording portion further records the third and fourth auxiliary data on the recording medium.

The digital video signal recording apparatus may further comprise: a thinned video signal generation circuit (68b) for generating a thinned video signal having the first resolution from the still picture video signal such that one frame of the video signal corresponds to one frame of the thinned video signal. The recording portion records the division-converted signal on the magnetic tape in a first mode and records the thinned video signal on the magnetic tape in a second mode.

The digital video signal recording apparatus may further comprise: a thumbnail video signal generation circuit (74), having a memory (75), for generating thinned video data from the still picture video signal, accumulating the thinned video data in the memory, and generating a thumbnail video signal having the first resolution from the still picture video signal by reading the accumulated thinned video data from the memory such that an image of one frame of the thumbnail video signal includes images of a plurality of frames of the still picture video signal and for generating position data for identifying positions of the plurality of frames on the recording medium and accumulating the position data in the memory, the recording portion recording the division-converted signal on the magnetic tape in a first mode and recording the thumbnail video signal and the position data from the memory as third auxiliary data on the magnetic tape in a second mode.

In the digital video signal recording apparatus, the recording portion records the thumbnail video signal and the position data on the recording medium just after the recording portion stops recording the division-converted signal in response to a recording stop signal.

In the digital video signal recording apparatus, the auxiliary data generation circuit further generates third auxiliary data indicative of a masking command to be used in a reproduction apparatus without a function for restoring the reproduced division-converted signal to the first video signal to mask the reproduced division-converted signal.

According to this invention, a digital video signal reproducing apparatus is provided which comprises: a reproducing circuit (28-35) for reproducing a video signal having a first resolution and auxiliary data from a recording medium, the auxiliary data regarding data for forming one frame of a still picture video signal from a plurality of frames of the video signal; a still picture video signal generation circuit (66, 67, 69) for generating the still picture video signal such that one frame of a still picture video signal is formed from a plurality of frames of the video signal in accordance with the auxiliary data.

The digital video signal reproducing apparatus may further comprise: an auxiliary data reading circuit (31, 36), having a memory (37), for reading auxiliary data indicative of position data of frames of the still picture video signal recorded on the recording medium at an end of recording the video signal and storing the auxiliary data in the memory; and a searching circuit (36) response to a searching command for searching one frame of the still picture video signal in accordance with the auxiliary data from the memory.

The features of the present invention will become more readily apparent from the following detailed description of an exemplary embodiment and accompanying drawings, in which:
Fig. 1 is a block diagram of a digital video signal recording and reproducing apparatus according to an embodiment of this invention;
Fig. 2 is a block diagram of the video signal switching processing circuit 1 shown in Fig. 1;
Fig. 3A is a block diagram of the recording processing circuit shown in Fig. 1;
Fig. 3B is a block diagram of the reproducing circuit 69 shown in Fig. 1;
Figs. 4A to 4C are illustrations of this embodiment illustrating the method of dividing the Y signal into eight in the first mode;
Figs. 5A to 5C are illustrations of this embodiment illustrating micro-blocks of the Y signal and the color difference signals Cr and Cb.
Fig. 6 is an illustration of this embodiment showing the dividing operation in the second mode.
Figs. 7A and 7B are illustration of this embodiment showing bit format of the pack data;
Figs. 8A and 8B are time charts of this embodiment showing the operation of the recording the HD still picture signal;
Figs. 9A to 9C are illustration of the prior art showing blocks for the DCT operation;
Fig. 10A and 10B are illustrations of the prior art showing a screen format and a partial enlarged view of the screen format;
Fig. 11 is an illustration of the prior art showing a data format;
Fig. 12 is an illustration of the prior art showing a format of a synchronous block;
Fig. 13 is an illustration of the prior art showing a track format; and
Figs. 14A to 14E are time charts of the prior art showing respective recording modes.

The same or corresponding elements or parts are designated with like references throughout the drawings.

Hereinbelow will be described an embodiment of this invention.

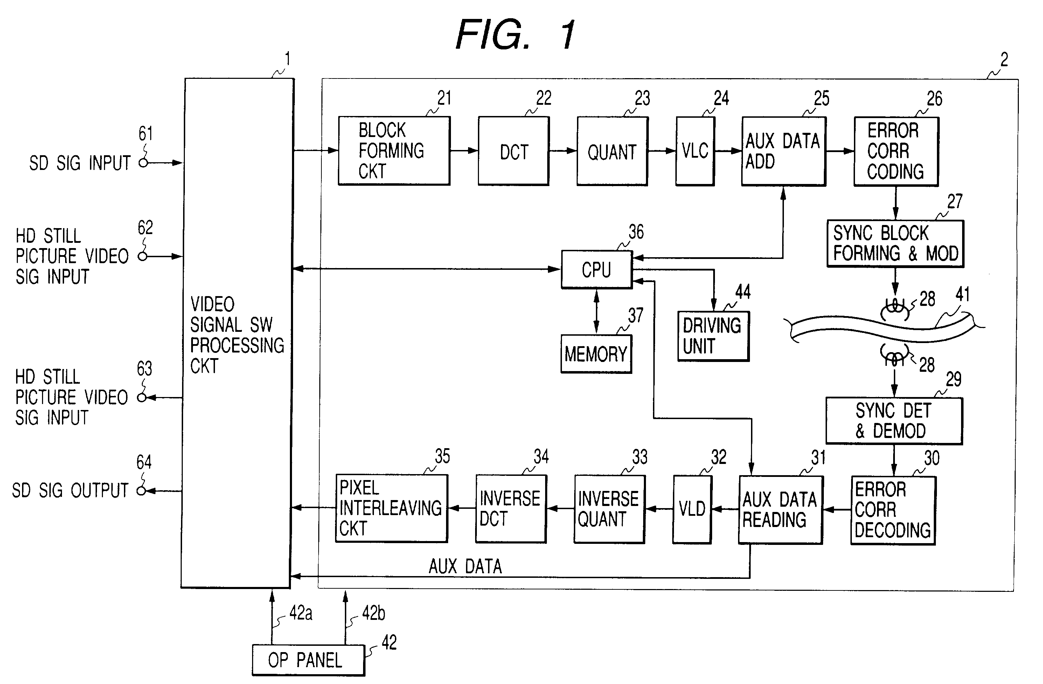

Fig. 1 is a block diagram of a digital video signal recording and reproducing apparatus according to an embodiment of this invention.

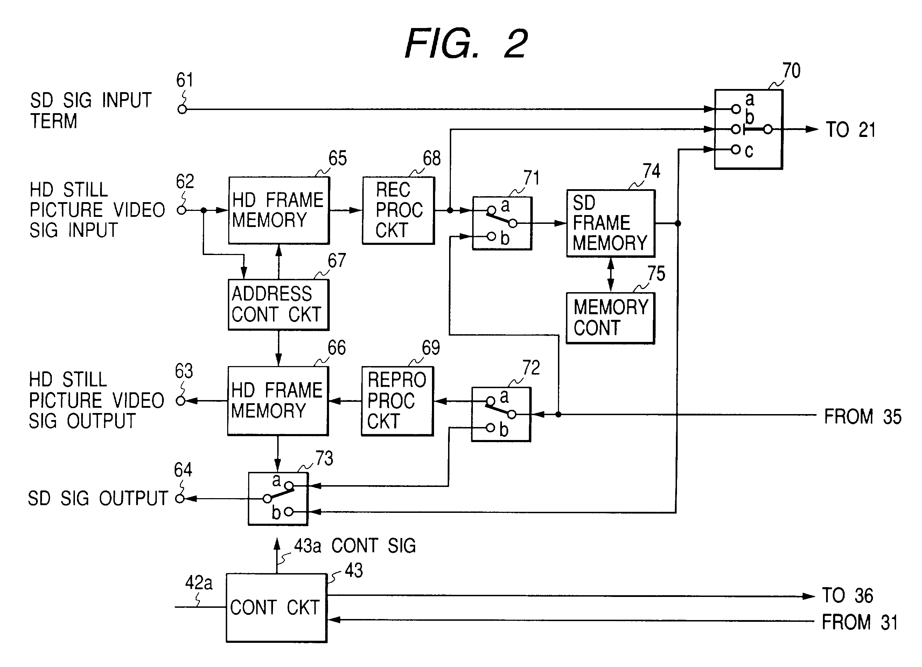

The digital video signal recording and reproducing apparatus comprises a video signal switching processing circuit 1 and a video signal recording and reproduction circuit 2. Fig. 2 is a block diagram of the video signal switching processing circuit 1 shown in Fig. 1.

As shown in Fig. 2, the video signal switching processing circuit 1 mainly comprises an input terminal 61 for inputting a digital SD signal, an input terminal 62 for inputting a digital high resolution still video signal (hereinafter referred to as "HDS signal"), an output terminal 63 for outputting a reproduced HDS signal, an output terminal 64 for outputting a reproduced SD signal, first and second HD frame memories 65 and 66 for storing the HDS signal every frame unit, a recording processing circuit 68 for effecting inserting dummy data and processings necessary for recording, a reproduction processing circuit 69 for effecting removing the dummy data and processing necessary for reproducing, an address control circuit 67 for controlling reading and writing addresses of the HD frame memories 65 and 66, switch circuits 70, 71, 72, and 73, an SD frame memory 74 for generating and storing a thumbnail picture video signal generated in the frame of the SD signal, and a memory control circuit 75 for effecting reading controlling and writing controlling of the SD frame memory 74. Respective elements in the video signal switching processing circuit 1 are controlled by a control circuit 43 in response to a command signal from an operation panel 42, the auxiliary data, command signals and data from the VTR portion 2.

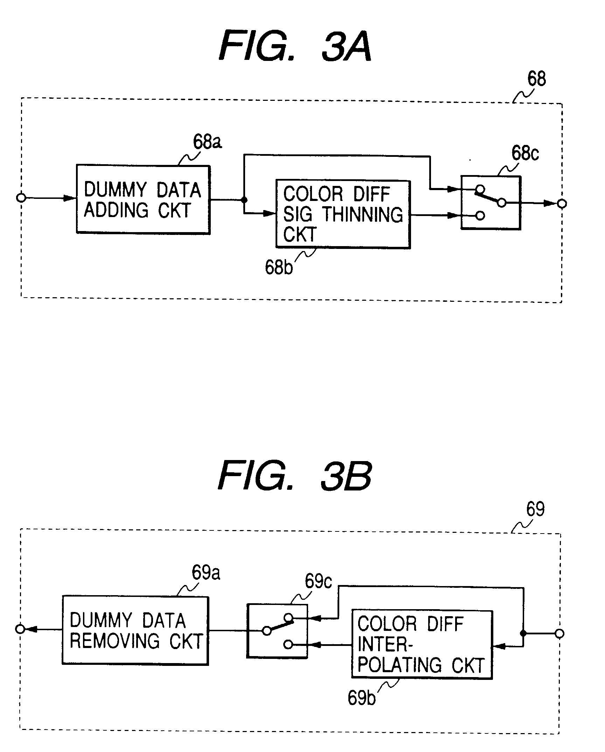

Fig. 3A is a block diagram of the recording processing circuit 68 shown in Fig. 1. The recording processing circuit 68 comprises a dummy data adding circuit 68a for adding dummy data to an output of the HD frame memory 65, a color difference signal thinning circuit 68b for thinning out pixels of the color difference signal in the horizontal direction, and a switch circuit 68c.

Fig. 3B is a block diagram of the reproducing circuit 69 shown in Fig. 1. The reproduction processing circuit 69 comprises a dummy data removing circuit 69a for removing dummy data added on recording from the reproduced signal, a color difference signal interpolating circuit 69b for interpolating pixels of the reproduced color difference signal in the horizontal direction, and a switch circuit 69c.

The recording processing circuit 68 is switchable between the first mode (the mode in the condition of the switch circuit 68c as shown in the drawing) for diving one HD frame into eight regions and the second mode (the mode in the opposite condition of the switch circuit 68c in the drawing) for diving one HD frame into four regions. Correspondingly, the reproduction processing circuit 69 is also switchable between the first mode (the mode in the condition of the switch circuit 69c as shown in the drawing) and the second mode (the mode in the opposite condition of the switch circuit 69c in the drawing) for effecting process for interpolating pixels of the color difference signal in the horizontal direction. Respective switch circuits are switched in response to a control signal from a control circuit 43.

In this embodiment, it is assumed that the number of effective pixels in the horizontal direction of the Y signal of the HDS signal is 1280 (hereinafter the frame of the HDS signal is referred to as "HD frame" and the frame of the SD signal is referred to as "SD frame "), the number of effective lines in a frame in the vertical direction is 1024, the number of pixels of the Cr and Cb signals in horizontal direction is 640 (which is a half of that of the Y signal) and the number of the Cr and Cb signals in vertical direction is 1024 which is the same as the Y signal.

The inputted HDS signal is supplied to the first HD frame memory 65 and to the address control circuit 67 and one HD frame of the HDS signal is stored in in the first HD frame memory 65. The address control circuit 67 controls reading address of the of the first HD frame memory 65 as mentioned later to interleave or arrange the pixels of the HDS signal. The HDS signal (hereinafter referred to as "division-converted signal" to distinguish it from the input HDS signal) read from the HD frame memory 65 is supplied to the switch circuits 70 and 71.

The reproduction signal inputted from the video signal recording and reproduction circuit 2 is supplied to the switch circuit 71. The switch circuit 71 selects the division-converted signal on recording and the reproduction signal on reproducing and inputs it to the SD frame memory 74. The memory control circuit 75 generates the thumbnail video signal corresponding to the inputted HDS signal by thinning out (that is, non-writing) data of the pixels of the division-converted signal on recording and successively stores it in the SD frame memory 74. Moreover, in the successive shot mode for successively shooting a plurality of frames, it is desirable to generate only thumbnail video signal corresponding to the first and last frame of the HDS signal. The thumbnail video signal is generated such that a hundred frames of the HDS signal is included in one SD frame for example.

The output signal of the SD frame memory 74 is supplied to switch circuits 70 and 73. The switch circuit 70 selects either of the input SD signal, the division-converted signal, or the thumbnail video signal and supplies it to a block forming circuit 21 of the video signal recording and reproduction circuit 2. When the successively recording operation of the HDS signal finishes, the switch circuit 70 is controlled to continuously record the thumbnail video signal Just after the end of recording.

In this embodiment, the video signal recording and reproduction circuit 2 comprises the VTR according to the DVC standard, which is referred to as "VTR portion 2". The video signal recording system of the VTR portion 2 mainly comprises a block forming circuit 21 for forming blocks of pixels for the DCT operation, a DCT circuit 22 for effecting the DCT operation, a quantizing circuit 23 for effecting quantizing, a VLC (Variable Length Coding ) circuit 24 for effecting the variable length coding, auxiliary data adding circuit 25 for adding auxiliary data in the sub-code sectors, adding video AUX data, and inserting data for controlling, an error correction coding circuit 26 for adding parity bits for error correction to the video data, a synchronous block forming and modulation circuit 27 for effecting formation of synchronous blocks and modulation for recording on a magnetic tape 41, a magnetic head 28 for recording the modulated recording signal on the magnetic tape 41.

The video signal reproduction system comprises a magnetic head 28 for reproducing data from the magnetic tape 41, a SYNC detection and demodulation circuit 29 for detecting the synchronous blocks and effecting demodulation, an error correction decoding circuit 30 for effecting error correction on the basis of the read parity bits, an auxiliary data reading circuit 31 for reading auxiliary data in the sub-code sector, the video AUX data, and data for controlling, a VLD (Variable Length Decoding ) circuit 32 for effecting the variable length decoding, an inverse quantizing circuit 33 for effecting inverse-quantizing, an inverse-DCT circuit 34 for effecting an inverse-DCT operation, a pixel interleaving (rearrangement) circuit 35 for interleaving pixels.

Moreover, a CPU 36 is responsive to the auxiliary data adding 25 and the auxiliary data reading circuit 31. The CPU 36 generates and controls adding and reading the auxiliary data. A memory 37 for storing the auxiliary data for searching mainly.

An output signal of the pixel interleaving circuit 35 of the VTR portion 2 is supplied to switch circuits 71 and 72 of the video signal switching processing circuit 1. The switch circuit 72 outputs the reproduction signal to the side of the switch circuit 73 when the reproduction signal is the SD signal and outputs it to the second HD frame memory 66 through the reproduction processing circuit 69 when it is the division-converted signal. When the division-converted signal is reproduced, the address control circuit 67 controls the reading address of the HD frame memory 66 to restore the arrangement of the pixel which was interleaved on recording and controls the reading address to output one HD frame of data in the order of input on recording.

Then, a method of dividing the HD frame and interleaving pixels on recording of the HDS signal will be described.

The inputted HDS signal is stored in the HD frame memory 65 and is divided into eight such that the screen area is eight screen areas and the divided HDS is converted to be correspondent with one frame of the SD signal (one SD frame) and it is inputted to the VRT portion 2.

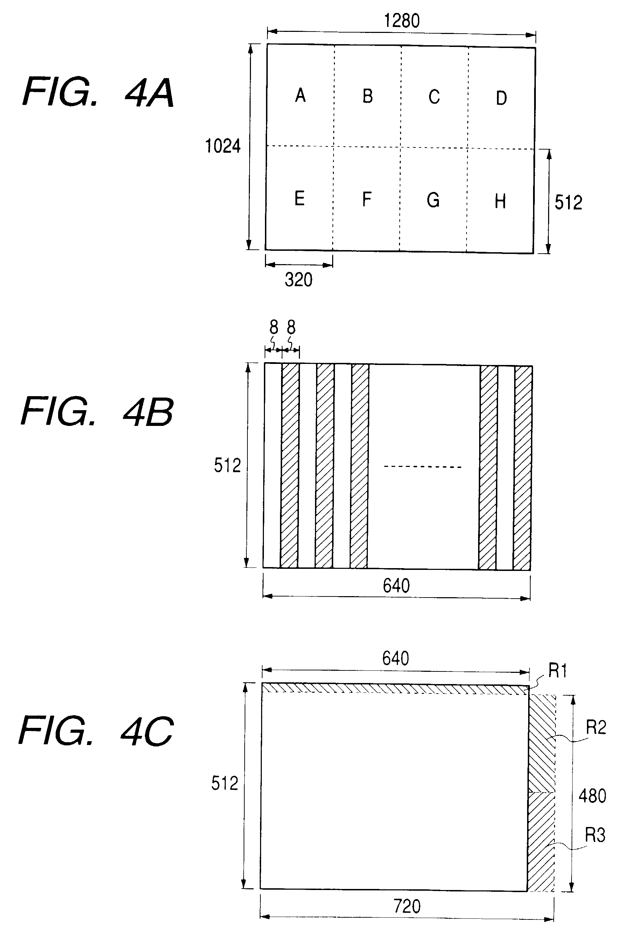

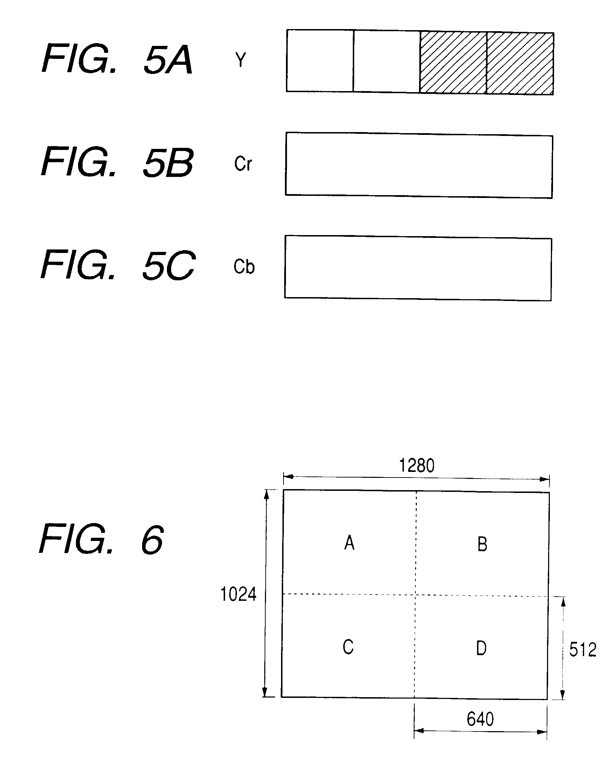

Figs. 4A to 4C are illustrations of this embodiment illustrating the method of dividing the Y signal into eight in the first mode (which is a mode for dividing one HD frame into eight). Figs. 5A to 5C are illustrations of this embodiment illustrating micro-blocks of the Y signal and the color difference signals Cr and Cb.

More specifically, one HD frame is divided into four in the horizontal direction and divided into two in the vertical direction and each of the regions A, B, C, D E, F, G, and H after division includes horizontal 320 pixels x vertical 512 pixels. Because one SD frame includes horizontal 720 pixels x vertical 480 pixels, each of regions A to H does not correspond to one SD frame as it is, so that dummy data is inserted and pixels are moved as follows:

At first, as shown in Fig. 4B, dummy data is inserted to the HDS signal such that in each of the region divided into eight (horizontal 320 pixels x vertical 512 pixels), dummy data for eight pixels are inserted every eight pixels in the horizontal direction (horizontal eight pixels x vertical 512 pixels) to provided horizontal 640 pixels x vertical 512 pixels. The values of the dummy data are all "16". In Fig. 4B, the width of the eight pixels in the horizontal direction is shown with it enlarged for convenience.

Then, as shown in Fig. 4C, correspondence is made with the left lower corner (in the drawing) of the region of horizontal 640 pixels x 512 pixels agreed with that of the SD frame. Then, the pixels (horizontal 640 pixels x vertical 32 pixels) at the non-corresponding region R1 is moved to the peripheral region R2 (horizontal 80 pixels x vertical 256 pixels) on the right side of the SD frame. During this, the pixels are moved with every smallest unit of horizontal eight pixels x vertical pixels as much as possible. Moreover, the Y signal is moved with every this unit as much as possible, because, as shown in Fig. 5A, horizontal 32 pixels x vertical eight pixels form a micro-block. In the drawing, two blocks hatched out of four DCT blocks are formed of dummy data.

In the region R3 (horizontal 80 pixels x vertical 224 pixels) hatched slantwise to the right in the SD frame, data of "16" is stored as the dummy data. As mentioned, one SD frame of the Y signal is formed.

Moreover, the Cr and Cb signals are divided into eight as similar to the Y signal to make each region including horizontal 160 pixels x vertical 512 pixels. Then, as shown in Fig. 4C, correspondence is made with the left lower corner of the divided regions agreed with that of the SD frame. Then, the pixels (horizontal 640 pixels x vertical 32 pixels) at the non-corresponding region R1 is moved to the right side peripheral region R2 (horizontal 80 pixel x vertical 256 pixels) of the SD frame. During this, they are moved every minimum unit of horizontal eight pixel x vertical eight pixels as much as possible.

As mentioned above, pixel data of the Y signal, the Cr signal, and the Cb signal corresponding to one eighth of the HDS signal are successively converted into those of one frame of the SD signal, so that one HD frame of the HDS signal is converted into eight SD frames of the video signal and inputted to the VTR portion 2.

In the recording system of the VTR portion 2, a special processing for the HDS signal mentioned below is effected in addition to the signal processing such as the DCT operation, the quantizing, the variable length coding or the like and then the video information is recorded on the magnetic tape 41. In the DVC standard, one SD frame of the video data is recorded over ten tracks, so that these ten tracks are referred to as one track frame.

In the first mode, eight SD frames corresponding to one HD frames are recorded over eight track frames (80 tracks). That is, the address control circuit 67 of the video signal switching processing circuit 1 effects controlling to output one SD frame obtained by dividing it into eight eight times.

Moreover, auxiliary information indicative of dividing one HD frame into eight (divisor), auxiliary information indicative of recording one SD frame eight times (the number of repeating), auxiliary information indicative of what is the number of the present frame from the beginning of the track frames, auxiliary information indicative of a class of the screen size (the number of pixels in the horizontal direction and the number of pixels in the vertical direction) of the input HDS signal (source picture class), auxiliary information indicative of a ratio between the number of pixels of the luminance signal of the input HDS signal and the number of the pixels of two color difference signals (color difference rate), in the reproduction apparatus without the function for restoring the division-converted signal obtained by dividing the HDS signal to the original HDS signal, auxiliary information for masking (obscuring) the division-converted signal, and auxiliary information for expanding functions are stored at the sub-code sector which is an auxiliary information recording region of each track frame.

As the expansion functions, for example, the number of dividing the screen and a ratio of the number of the dummy data in one frame of the division-converted signal are made variable by setting by a user and the ratio is recorded as auxiliary information for this expansion function. Increasing the ratio of the dummy data (that is, the blank space) increases an amount of data assigned to the actual video data in the DCT operation, so that a quality of reproduction image can be improved.

Moreover, recording the auxiliary information indicative of the number of times of repeating enables the operator to set the number of times of repeating, so that a balance between the successive shooting speed and avoiding error by the conceal effect can be set as the circumstance needs.

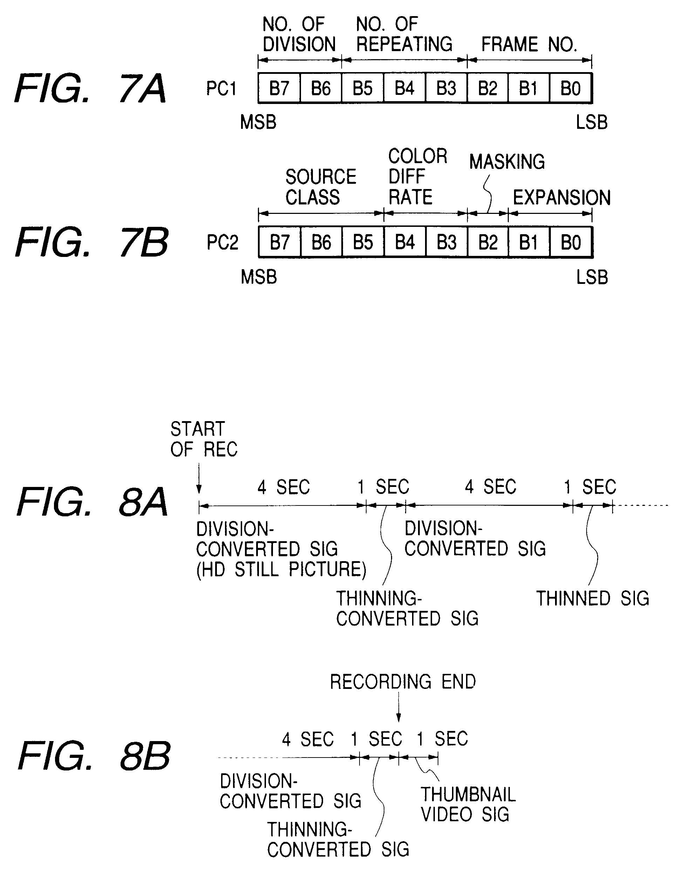

Figs. 7A and 7B are illustration of this embodiment showing bit format of the pack data. The auxiliary information mentioned above is recorded at pack data PC1 and PC2 at a maker option region provided in the system data. That is, the auxiliary information indicative of the number of dividing the screen at bits B7 and B6 of the pack data PC1, the auxiliary information indicative of the number of times of repeating at bits B5 to B3, the auxiliary information indicative of the frame number is recorded at bits B2 to B0, the auxiliary information indicative of the class of the source picture at bits B7 to B5 in the pack data PC2, the auxiliary information indicative of the color different rate at bits B4 and B3, the auxiliary information regarding to masking at bit B2, and the auxiliary information recording to the expansion function at bits B1 and B0 is recorded. This processing is performed by the auxiliary information writing circuit 25 in accordance with a command from the CPU 36. The auxiliary information indicative of the color difference rate shows either of (4:4:4), (4:2:2), (4:2:0), or (4:1:1). Moreover, the auxiliary information indicative of the class of the source picture is obtained by grouping the screen size of the input HDS signal into either of horizontal 720 pixels x vertical 960 pixels, horizontal 1440 pixels x vertical 960 pixels, horizontal 1024 pixels x vertical 1280 pixels, and horizontal 1920 pixels x vertical 1036 pixels and the obtained group number is set thereto.

Recording the auxiliary information regarding the masking can be set from the SS flag (the flag indicative of the source picture and recording condition (the presence or the absence of scrambling) at the pack data PC1.

Moreover, in this embodiment, one HD frame of video signal is converted into one SD frame of video signal to generate the thinning-converted signal by thinning out pixels of the input HDS signal and is recorded on the magnetic tape 41 together with the division-converted signal. This enables to effect searching of the HDS signal recorded by the command without the function for restoring the recorded signal to the original HDS signal on reproduction readily through watching on a view finder.

Moreover, in this embodiment, the thumbnail video signal is recorded on the magnetic tape 41 when the successive recording operation finishes. At the same time, the auxiliary information indicative of the thumbnail video signal, the auxiliary information for specifying the recording position of the HDS frame of the thumbnail video signal provided by the CPU 36 (that is, time code dat (recording date, month, and year, hour, minute, and second) or the absolute track number) is recorded at a predetermined area.

Figs. 8A and 8B are time charts of this embodiment showing the operation of the recording the HD still picture signal. The division-converted signal corresponding to the HD still picture signal is repeatedly recorded for four second even in the single shot recording mode. This repeatedly recording is provided in consideration of the operation ability of the video signal recording apparatus if the single shot still picture is recorded on the magnetic tape 41 capable of recording a moving picture for about one hour. Then, the thinning-converted signal is repeatedly recorded for one second. The reason for repeatedly recording for one second is that if another single shot recording is performed just after one single shot recording, the magnetic tape 41 is slightly rewound, so-called back spaced to obtain the continuousness of the recording pattern on the magnetic tape 41 and it enters the recording mode after the tracking servo becomes stable, wherein it takes about 0.7 seconds that the tracking servo becomes stable. Then, though the recording mode is erroneously performed in the condition that the tape is rewound by the amount corresponding to 0.7 seconds, several frames of the thinning-converted signal will be left. Accordingly, the recording of the thinning-converted signal is effected for one second. Moreover, if the single shot recording is repeated, as shown in Fig. 8A, the pattern (four second + one second) is repeated. In the case of the successive-shoot recording, it is possible to record fifteen frames for four seconds maximally because one HD frame is recorded over 80 tracks as mentioned above. Moreover, the distinction between the single shot recording and the successive shot recording is made by judging whether the operator depresses the recording command key on the operation panel 42 once for a short time, which is the single shot recording or continuously depresses it, which is the successive shoot recording.

As shown in Fig. 8B, at the end of recording, the thumbnail video signal is recorded for one second together with the auxiliary information mentioned above. This recording operation, is performed just before ejection of a magnetic tape 41 in recording to an ejection command of the magnetic tape 41 from the operation panel 42 for example.

Then, the processing in the reproduction system of the VTR portion 2 will be described. The data recorded on the magnetic tape 41 is reproduced and demodulated to output digital data train. From this data train, the SYNC word (referring Fig. 11) is detected and one synchronous block of data is outputted. The error detection and correction processing is effected to the reproduction data obtained as mentioned using the inner parity in the synchronous block and in addition, the video data or the like is subjected to the error detection and error correction processing using outer parity. Then, reading the auxiliary information, the variable length decoding processing (the inverse processing of the variable length coding), the inverse quantizing processing, the inverse DCT operation are successively effected. Further, pixels are rearranged to the original arrangement and supplied to the switch circuits 71 and 72 of the video signal switching processing portion 1.

The processing mentioned above is common between the SD signal and the division-converted signal. Further, on reproduction of the division-converted signal, the auxiliary information reading circuit 31 reads data on the sub-code sectors to obtain necessary auxiliary information such as the number of dividing the screen, the number of repeating, and the frame number. Then, the information regarding the division-converted signal is supplied to the video signal switching portion 1.

The reproduction processing circuit 69 of the video signal switching processing portion 1 removes the dummy data added on recording. The address control circuit 67 controls address of storing the reproduced data in the second HD frame memory 66 on the basis of the information regarding the HDS signal supplied form the VTR portion 2 under control of the control circuit 43 through the control signal 43a.

Similarly, data at all eight-divided regions is stored in the HD frame memory 66 and the data is read from the HD frame memory 66 as one HD frame. The screen size or the like of the read out video image is determined from the auxiliary information recorded at the sub-code sector. The reproduced HDS signal is obtained as mentioned.

Moreover, in this embodiment, if the magnetic tape 41 is loaded on reproduction, the magnetic tape 41 is always driven to move to the end position of recording and enters the reproduction mode to reproduce the thumbnail video signal recorded at the end of the recorded portion. Then, the reproduced thumbnail signal is stored in the SD frame memory 74 through the switch circuit 71. The CPU 36 reads the time code data for specifying the recording signal of the HDS signal and stores it in the memory 37.

When the operator effects searching, the operator operates the operation panel 42 to make the apparatus in the searching mode. This switches the switch circuit 73 to the contact of b side, the thumbnail video signal is supplied to a display apparatus (not shown), so that the thumbnail pictures are displayed. The operator selects a necessary picture with watching the thumbnail pictures (for example, the corresponding time codes are displayed under thumbnail pictures and the operator selects one by input the time code from the operation panel 42, The CPU 36 reads the corresponding time code from the memory 37 and drives the magnetic tape 41 by a driving unit 44 in accordance with the time code and reproduces and outputs the still picture selected by the operator.

Then, the processing in the second mode (the mode for processing thinning the pixels of the color difference signal in the horizontal direction) will be described. The second mode is of recording HDS signal on the four track frames.

Fig. 6 is an illustration of this embodiment showing the dividing operation in the second mode.

In the second mode, the Y signal is divided into four on the screen. That is, 1280 pixels in the horizontal direction x 1024 pixels in the vertical direction is divided into two regions in the horizontal direction and divided into four regions in the vertical direction. Because the respective regions A to D after dividing includes 640 pixels in the horizontal direction x 512 pixels in the vertical direction, as similar to the first mode, it is converted into the pixel data of the Y signal of one SD frame. In the second mode, the dummy data of "16" is inserted to the region corresponding to the region R3 shown in Fig. 4C.

On the other hand, the color difference signals Cr and Cb are thinned half to provide 320 pixels in the horizontal direction x 1024 pixels in the vertical direction and divided into four regions by horizontally and vertically dividing them into two as similar to Y signal. The number of the divided region is 160 pixels in the horizontal direction x 512 pixels in the vertical direction. They are converted into the pixel data of the color difference signals Cr and Cb of one SD frame as similar to the first mode.

As mentioned, in the second mode, one HD frame is divided into four regions, that is, converted into the vide data of four SD frames and supplied to the VTR portion 2 and recorded on the magnetic tape 41.

In the second mode, four SD frames corresponding to one HD frame are recorded on four track frames (forty tracks). That is, the number of repeating is four.

Other points are the same as the first mode.

In this embodiment, the contact a or the contact b of the switch circuit 70 is selected by selecting the recording the SD signal or the HDS signal by the operator. When recording the HDS signal is selected, the contact c is selected only when the thumbnail video signals are recorded as mentioned. Moreover, the switch circuit 68c of the recording processing circuit 68 is switched by selecting the first or the second mode by the operator. Then, the information indicative of either of the SD signal recording or the HDS signal recording and the information indicative of either of the first or the second mode are supplied to the CPU 36 to effect the switching control at respective portions the VTR portion 2 on recording. Moreover, on reproduction, the control circuit 43 judges whether the signal is SD signal or the HDS signal and whether it is the first or the second mode and effects the switching control of the switch circuits 72 and 69c.

Moreover, the macro-blocks which is a unit of processing in the VTR portion 2 is formed to include two blocks of the dummy data of the Y signal as shown in Fig. 5A. Then, in the DCT blocks including the data of the same value, all ac coefficients become "0" by the DCT operation, so that it is possible to assign bits to other DCT blocks. Then, recording and reproduction is possible with the quality of the HDS signal kept high.

Moreover, in the second mode of this embodiment, because the HDS signal having the ratio of pixels of Y and C 2:1 is converted into the SD signal having the ratio of the number of pixels of Y and C 4:1 for recording and reproducing, so that the number of recording can be increased with the quality of the video signal slightly reduced.

Moreover, the number of the pixels of the HDS signal is not limited to 1280 pixels in the horizontal direction x 1024 pixels in the vertical direction with respect to the Y signal but for example, 1920 pixels in the horizontal direction x 1036 pixels in the vertical direction can be used. Further, it is not necessary to divide one HD frame evenly into eight or four but for example, 1920 pixels in the horizontal direction x 1036 pixels in the vertical direction are divided into twelve or six.

Moreover, the value of the dummy data stored in the space portion of one SD frame is not limited to "16" or "128" but it is also possible that they are the same value with in the range of the DCT block which is a unit of the DCT operation ( eight pixels in the horizontal direction x eight pixels in the vertical direction ).

Moreover, it is not necessary to divide the signal with respect to the screen region but for example, it is also possible to form the SD frame having different number of pixels every eight pixels.

## Claims

1. A digital video signal recording apparatus comprising:
recording means (21-27) for recording a digital video signal having a first resolution on a recording medium;
division-converting means (65, 67) for converting a still picture video signal having a second resolution higher than said first resolution into a division-converted signal through dividing said still picture video signal by n which is a natural number more than one; and
auxiliary data generation means (43, 36) for generating first auxiliary data indicative of said n and second auxiliary data indicative of a frame size of said still picture video signal, said recording means recording said division-converted signal and said first and second auxiliary data on said recording medium.

2. The digital video signal recording apparatus as claimed in claim 1, wherein said auxiliary data generating means further generates third auxiliary data indicative of a ratio of the number of pixels of a luminance signal of said still picture video signal and the number of pixels of a color difference signal of said still picture video signal, said recording means further recording said third auxiliary data on said recording means.

3. An apparatus according to claim 1 or 2, wherein said recording means comprises video
data compression means for compressing said
division-converted signal through quadrature conversion every block including a predetermined number of pixels and said division-converting means comprises:
dummy data generation means (68a) for generating and adding dummy data to the divided still picture video signals with a unit of said block to generate said
division-converted signal; and
changing means (43, 65, 67, 68a) responsive to a command for changing a ratio of the number of said generated dummy data in one frame of said
division-converted signal and the number of data of said still picture video signal of one frame and changing said n, said auxiliary data generation means generates fourth auxiliary data indicative of said ratio and said recording means records the changed n and said fourth auxiliary data on said magnetic medium.

4. An apparatus according to claim 1, 2 or 3, wherein said division-conversion means outputs one frame of said
division-converted signal a predetermined times more than once and said auxiliary data generation means, generates third auxiliary data indicative of said predetermined times, comprises counting means for counting times of outputting the same frame of said
division-converted signal, and generates fourth auxiliary data indicative of the count value, and said recording means further records said third and fourth auxiliary data on said recording medium.

5. An apparatus according to claim 1, 2, 3 or 4, further comprising:
thinned video signal generation means (68b) for generating a thinned video signal having said first resolution from said still picture video signal such that one frame of said video signal corresponds to one frame of said thinned video signal, said recording means recording said division-converted signal on said magnetic tape in a first mode and recording said thinned video signal on said magnetic tape in a second mode.

6. An apparatus according to any one of the preceding claims, further comprising: thumbnail video signal generation means (74), having a memory (75), for generating thinned video data from said still picture video signal, accumulating said thinned video data in said memory, and generating a thumbnail video signal having said first resolution from said still picture video signal by reading the accumulated thinned video data from said memory such that an image of one frame of said thumbnail video signal includes images of a plurality of frames of said still picture video signal and for generating position data for identifying positions of said plurality of frames on said recording medium and accumulating said position data in said memory, said recording means recording said division-converted signal on said magnetic tape in a first mode and recording said thumbnail video signal and said position data from said memory as third auxiliary data on said magnetic tape in a second mode.

7. An apparatus according to claim 6, wherein said recording means records
said thumbnail video signal and said position data on said recording medium just after said recording means stops recording said division-converted signal in response to a recording stop signal.

8. An apparatus according to any one of the preceding claims, wherein said auxiliary data generation means further generates third auxiliary data indicative of a masking command to be used in a reproduction apparatus without a function for restoring the reproduced division-converted signal to said first video signal to mask the reproduced division-converted signal.

9. A digital video signal reproducing apparatus comprising:
reproducing means (28-35) for reproducing a video signal having a first resolution and auxiliary data from a recording medium, said auxiliary data regarding data for forming one frame of a still picture video signal from a plurality of frames of said video signal;
still picture video signal generation means (66, 67, 69) for generating said still picture video signal such that said one frame of a still picture video signal is formed from a plurality of frames of said video signal in accordance with said auxiliary data.

10. The digital video signal reproducing apparatus as claimed in claim 9, further comprising:
auxiliary data reading means (31, 36), having a memory (37), for reading auxiliary data indicative of position data of frames of said still picture video signal recorded on said recording medium at an end of recording said video signal and storing said auxiliary data in said memory; and
searching means (36) response to a searching command for searching one frame of said still picture video signal in accordance with said auxiliary data from said memory.
